# EUROPÄISCHE PATENTSCHRIFT

(11) **EP 3 290 737 B1**
(45) Veröffentlichungstag und Bekanntmachung des Hinweises auf die Patenterteilung: **15.05.2019**
(21) Anmeldenummer: 17187728.5
(22) Anmeldetag: 24.08.2017
(51) Int. Cl.: F16F 9/02, F16F 13/00, F03G 1/10, E05F 3/02

(54) **FEDEREINRICHTUNG**
SPRING DEVICE
DISPOSITIF DE RESSORT

(30) Priorität: 05.09.2016 DE 102016116519
(43) Veröffentlichungstag der Anmeldung: 07.03.2018
(73) Patentinhaber: Stabilus GmbH, 56070 Koblenz (DE)
(72) Erfinder: Hewel, Michael, 56154 Boppard (DE); Darscheid, Karl-Heinz, 56204 Hillscheid (DE)
(74) Vertreter: Klein, Thomas

(56) Entgegenhaltungen:
- EP-A2- 0 798 485
- DE-A1- 2 453 986
- DE-A1- 2 709 514
- DE-A1- 3 322 796
- DE-U- 1 888 928
- DE-U- 1 992 800
- US-A- 3 870 287
- US-A- 4 966 403

## Beschreibung

Die Erfindung bezieht sich auf eine Federeinrichtung zum Bewegungsantrieb eines bewegbaren Bauteils aus einer Ruheposition in eine Verstellposition, wobei das bewegbare Bauteil von einer vorgespannten Feder in die Verstellposition belastet ist, mit einem mit einem Gas gefüllten Zylinder, der an seinem ersten Ende von einem ersten Boden und an seinem zweiten Ende von einem zweiten Boden verschlossen ist und dessen Innenraum von einem axial verschiebbaren Kolben in eine erste Arbeitskammer und eine zweite Arbeitskammer unterteilt ist, wobei die erste Arbeitskammer und die zweite Arbeitskammer über eine Drossel miteinander verbunden sind, und der Kolben eine Kolbenstange aufweist, die durch die erste Arbeitskammer hindurch und abgedichtet durch den ersten Boden nach außen geführt ist sowie mit ihrem freien Ende an dem bewegbaren Bauteil oder einem feststehenden Bauteil befestigt ist, wobei an dem Kolben eine zweite Kolbenstange angeordnet ist, die durch die zweite Arbeitskammer hindurch und abgedichtet durch den zweiten Boden nach außen geführt ist.

Bei derartigen Federeinrichtungen besteht die Ausfahrkraft aus der Summe der Kraft der vorgespannten Feder und dem in Ausfahrrichtung vorhandenen Kraftanteil der Gasfeder, die primär eine Dämpfung der Ausfahrbewegung der Kolbenstange bewirken soll. Die Dämpfkraft ist dabei abhängig von dem Druck des Gases in dem Zylinder. Bei steigendem Druck steigt auch die Dämpfkraft.

Bei immer höheren Widerständen der zu bewegenden Bauteile müssen auch die Kräfte der Feder steigen. Allein dies erfordert zum manuellen Bewegen des bewegbaren Bauteils aus der Verstellposition in die Ruheposition einen hohen Kraftaufwand. Soll dabei auch eine erhöhte Dämpfung der Bewegung aus der Ruheposition in die Verstellposition erfolgen, erhöht dies diesen Kraftaufwand noch.

Aus der DE 18 88 928 U ist eine Federeinrichtung der eingangs genannten Art bekannt, bei der der Zylinder drucklos mit einem Fluid gefüllt ist. Die Kolbenstange ist rohrartig ausgebildet, wobei zu beiden Seiten des Kolbens die Arbeitskammern über zum Inneren der Kolbenstange führenden Öffnungen miteinander verbindbar sind und eine der Öffnungen hubabhängig schließbar ist. Dadurch ist bis auf den Endhub eine Dämpfung der Ausfahrbewegung erreichbar. Zusätzlich ist die zweite Arbeitskammer über im Kolben angeordnete Rückschlagventile mit der ersten Arbeitskammer verbindbar, so daß der Einfahrhub zumindest weitgehend ungedämpft erfolgt.

Aufgabe der Erfindung ist es daher eine Federeinrichtung der eingangs genannten Art zu schaffen, durch die zum Verstellen des zu bewegenden Bauteils aus der Verstellposition in die Ruheposition einen reduzierten Kraftaufwand erfordert.

Diese Aufgabe wird erfindungsgemäß dadurch gelöst, daß der Zylinder ein mit einem unter Druck stehenden Gas gefüllter Zylinder einer Gasfeder ist.

Durch diese Ausbildung wird eine zumindest weitgehende Gleichheit der wirksam beaufschlagten Flächen des Kolbens auf seinen beiden Seiten erreicht, so daß die Gasfeder nun keine Kraft mehr zur Verstellung aus der Ruheposition in die Verstellposition beiträgt. Damit reduziert sich auch die manuell aufzubringende Kraft zum Bewegen des bewegbaren Bauteils aus der Verstellposition in die Ruheposition.

Da die Gasfeder zumindest weitgehend kraftneutral ist, kann sie auch für eine erhöhte Dämpfung der Bewegung aus der Ruheposition in die Verstellposition ausgelegt werden ohne in die entgegengesetzte Bewegungsrichtung einen erhöhten Kraftaufwand zu benötigen.

Eine erhöhte Dämpfung bei gleichem Querschnitt der Drossel wird dadurch erreicht, daß der Druck des Gases in dem Innenraum des Zylinders erhöht wird. Mit einer solchen Einstellung des Drucks des Gases in dem Zylinder kann bei ansonsten gleicher Federeinrichtung auf einfache Weise eine von Kunden gewünschte Dämpfung der Bewegung aus der Ruheposition in die Verstellposition und umgekehrt erreicht werden.

Bei einer Anwendung der Federeinrichtung in einem Kraftfahrzeug muß ihre Funktionssicherheit in einem Temperaturbereich zwischen -30° und +80° gewährleistet sein. Da sich das Volumen des Gases in der Gasfeder bei Temperaturänderung vergrößern oder verringern möchte, die aufgrund des konstanten Volumens des Innenraums des Zylinders aber nicht kann, würde bei einer bekannten Gasfeder sich der Druck in dem Zylinder verringern oder erhöhen. Dies würde bei hohen Temperaturen zu einer solchen zusätzlichen Kraft zum Bewegen des bewegbaren Bauteils aus der Verstellposition in die Ruheposition führen, daß eine solche Bewegung nicht mehr oder nur noch unter Aufbringung einer sehr hohen manuellen Kraft möglich wäre.

Da bei der Federeinrichtung nach der Erfindung eine Kraftausgeglichenheit der Gasfeder vorhanden ist, erfolgt zumindest weitgehend auch keine Beeinflussung der Bewegung aus der Ruheposition in die Verstellposition bei Temperaturveränderungen.

Diese Kraftausgeglichenheit wird noch weiter optimiert, wenn die erste Kolbenstange und die zweite Kolbenstange gleichen Querschnitt aufweisen.

Die Drossel kann in jeglicher Art Verbindung zwischen der ersten Arbeitskammer und der zweiten Arbeitskammer angeordnet sein.

Kein zusätzlicher Bauraum ist erforderlich, wenn die Drossel eine in dem Kolben axial durchgehend ausgebildete Drosselbohrung oder eine axiale Drosselnut in der Innenwand des Zylinders ist.

Hat dabei die Drosselnut einen unterschiedlichen Querschnitt über ihre Länge, so kann ein unterschiedlicher Dämpfungsverlauf über den Bewegungsweg aus der Verstellposition in die Ruheposition aufweisen.

Je nach Bedarf und dem vorhandenen Einbauraum kann die Feder eine mechanische Zugfeder oder eine Druckfeder sein. Diese Federn können an den unterschiedlichsten Stellen an dem bewegbaren Bauteil oder einem mit dem bewegbaren Bauteil verbundenen Bauteil angreifen.

Ein kompakter Aufbau wird dadurch erreicht, daß die Feder eine Schraubendruckfeder ist, die koaxial den Zylinder und die erste Kolbenstange mit radialem Spiel umschließt und mit ihrem ersten Ende an dem aus dem Zylinder ragenden Bereich der ersten Kolbenstange abgestützt ist und mit seinem zweiten Ende an dem Zylinder oder einem mit dem Zylinder verbundenen Bauteil abgestützt ist.

Erstreckt sich ein mit dem Zylinder koaxial verbundenes Führungsrohr von dem Zylinder in Erstreckungsrichtung der zweiten Kolbenstange, so ist die in das Innere des Führungsrohres ragende zweite Kolbenstange gegen Beschädigung geschützt. Weiterhin kann zumindest weitgehend die zweite Kolbenstange auch nicht durch eine dritte Kraft unbeabsichtigt beaufschlagt und die Funktion der Federeinrichtung beeinflußt werden.

Umschließt die Schraubendruckfeder außer dem Zylinder auch das Führungsrohr mit radialem Spiel, so ist sie zumindest weitgehend gegen Ausknicken gesichert.

Das bewegbare Bauteil kann eine um eine Schwenkachse schwenkbare Klappe sein, an der unmittelbar oder mittelbar die erste Kolbenstange sowie die Feder jeweils in einem Abstand zur Schwenkachse angelenkt sind.

Dabei erstreckt sich vorzugsweise die Schwenkachse horizontal. Weiterhin vorzugsweise erstreckt sich die Schwenkachse entlang eines Randes der Klappe.

Die Klappe kann eine Klappe eines Fahrzeugs sein.

Ausführungsbeispiele der Erfindung sind in der Zeichnung dargestellt und werden im Folgenden näher beschrieben. Es zeigen
- Figur 1: einen Längsschnitt eines ersten Ausführungsbeispiels einer Federeinrichtung in der Ruheposition
- Figur 2: einen Längsschnitt der Federeinrichtung nach Figur 1 in der Verstellposition
- Figur 3: einen Längsschnitt eines zweiten Ausführungsbeispiels einer Federeinrichtung in der Ruheposition
- Figur 4: einen Längsschnitt der Federeinrichtung nach Figur 3 in der Verstellposition
- Figur 5: eine Seitenansicht eines dritten Ausführungsbeispiels einer Federeinrichtung in der Ruheposition
- Figur 6: eine Seitenansicht der Federeinrichtung nach Figur 5 in der Verstellposition

Die in den Figuren dargestellten Federeinrichtungen weisen einen Zylinder 1 auf, dessen Innenraum mit einem unter Druck stehenden Gas gefüllt ist. Der Zylinder 1 ist an seinem ersten Ende durch einen ersten Boden 2 und an seinem zweiten Ende durch einen zweiten Boden 3 verschlossen. In dem Zylinder 1 ist ein Kolben 4 axial verschiebbar angeordnet, der den Innenraum des Zylinders 1 in eine erste Arbeitskammer 5 und eine zweite Arbeitskammer 6 unterteilt.

An dem Kolben 4 ist eine erste Kolbenstange 7 angeordnet, die sich koaxial durch die erste Arbeitskammer 5 erstreckt und durch eine erste Führungs- und Dichteinheit 8 abgedichtet nach außen geführt ist.

Weiterhin ist an dem Kolben 4 eine zweite Kolbenstange 9 gleichen Querschnitts wie die erste Kolbenstange 7 angeordnet, die sich koaxial durch die zweite Arbeitskammer 6 erstreckt und durch eine zweite Führungs- und Dichteinheit 10 abgedichtet nach außen geführt ist.

An der der ersten Arbeitskammer 5 zugewandten Seite des ersten Bodens 2 liegt eine erste Stützscheibe 13 und an der der zweiten Arbeitskammer 6 zugewandten Seite des zweiten Boden 3 liegt eine zweite Stützscheibe 14 an. In den Endpositionen des Hubes des Kolbens 4 kommt dieser an der ersten Stützscheibe 13 bzw. an der zweiten Stützscheibe 14 zur Anlage.

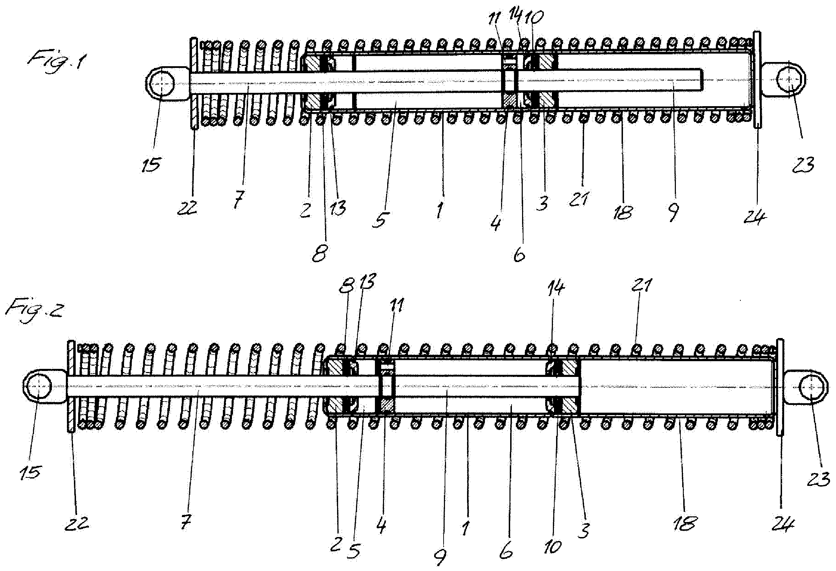

In den Figuren 1 bis 4 ist an dem freien Ende der ersten Kolbenstange 7 als erstes Befestigungselement eine erste Kugelpfanne 15 angeordnet, mit der die erste Kolbenstange 7 an einer nicht dargestellten Klappe eines Fahrzeugs angelenkt ist.

In den Figuren 1 und 2 erstreckt sich der Zylinder 1 koaxial über den zweiten Boden 3 hinaus und bildet ein Führungsrohr 18, in das die zweite Kolbenstange 9 hineinragt und an dessen Ende eine ein zweites Befestigungselement bildende zweite Kugelpfanne 23 angeordnet ist, mittels derer das mit dem Zylinder 1 fest verbundene Führungsrohr 18 an einem nicht dargestellten Karosserieteil des Fahrzeugs angelenkt ist.

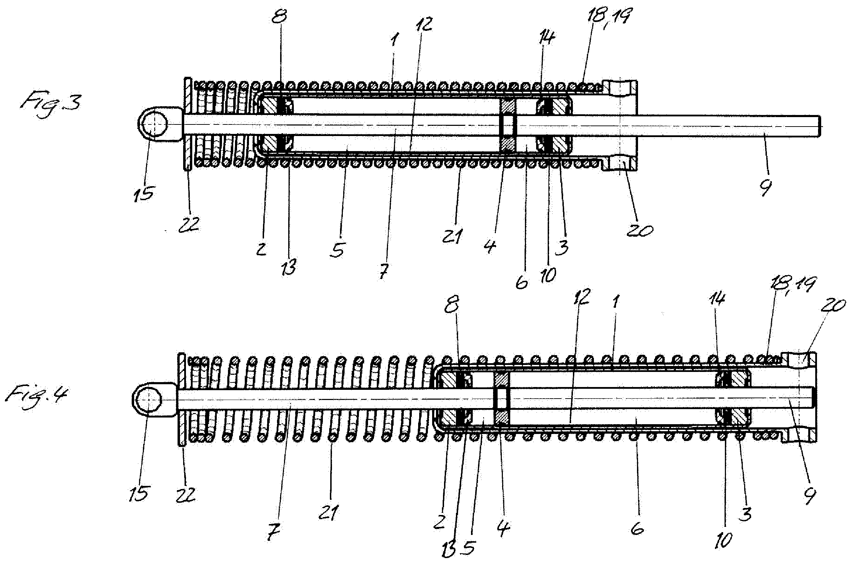

In den Figuren 3 und 4 ist der Zylinder 1 in ein Überrohr 19 eingesetzt, das sich über den zweiten Boden 3 hinaus erstreckt und mit seinem sich über den zweiten Boden 3 erstreckenden Bereich ein Führungsrohr 18 bildet, in das die zweite Kolbenstange 9 hineinragt. An dem freien Ende des Führungsrohres 18 ist ein zweites Befestigungselement 20 angeordnet, mittels dessen das mit dem Zylinder 1 fest verbundene Führungsrohr 18 an einem nicht dargestellten Karosserieteil des Fahrzeugs angeordnet ist.

In den Figuren 1 bis 4 sind Zylinder 1 und Führungsrohr 18 mit radialem Spiel von einer unter Vorspannung stehenden Schraubendruckfeder 21 umschlossen.

Mit ihrem ersten Ende stützt sich die Schraubendruckfeder 21 über eine erste Abstützscheibe 22 an der ersten Kugelpfanne 15 ab. Mit ihrem zweiten Ende ist die Schraubendruckfeder 21 in den Figuren 1 und 2 über eine zweite Abstützscheibe 24 an der zweiten Kugelpfanne 23 und in den Figuren 3 und 4 an dem zweiten Befestigungselement 20 abgestützt.

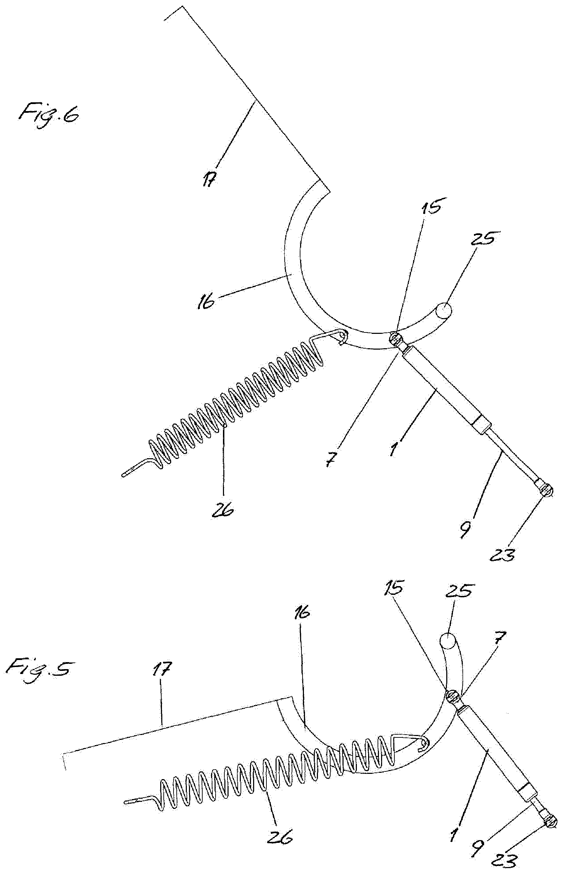

An dem freien Ende der ersten Kolbenstange 7 ist bei dem Ausführungsbeispiel der Figuren 5 und 6 als erstes Befestigungselement eine erste Kugelpfanne 15 angeordnet, mit der die erste Kolbenstange 9 an einem mit seinem einen Ende mit einer Klappe 17 verbundenen bogenartigen Zwischenstück 16 angelenkt ist. Das andere Ende des Zwischenstücks 16 ist um eine waagrechte Schwenkachse 25 an der Karosserie des Fahrzeugs schwenkbar gelagert.

Die erste Kugelpfanne ist 15 dabei in einem radialen Abstand zur Schwenkachse 25 an dem Zwischenstück 16 angelenkt.

Ebenfalls in einem radialen Abstand zur Schwenkachse 25 greift an dem Zwischenstück 16 mit ihrem einen Ende eine vorgespannte Zugfeder 26 an, die mit ihrem anderen Ende an einem nicht dargestellten Bauteil der Karosserie angeordnet ist.

Der Zylinder 1 und die Zugfeder 26 erstrecken sich dabei rechtwinklig zur Schwenkachse 25. Zylinder 1 und Zugfeder 26 können sich auch unter einem kleineren Winkel als 90° zueinander erstrecken.

Die zweite Kolbenstange 9 weist an ihrem freien Ende eine zweite Kugelpfanne 23 auf, mit der die zweite Kolbenstange 9 an einem nicht dargestellten Teil der Karosserie des Fahrzeugs angelenkt ist.

Bei dem Ausführungsbeispiel der Figuren 1 und 2 ist in dem Kolben eine Drosselbohrung 11 ausgebildet, die die erste Arbeitskammer 5 und die zweite Arbeitskammer 6 miteinander verbindet.

Bei dem Ausführungsbeispiel der Figuren 3 und 4 ist in der Innenwand des Zylinders 1 eine axiale Drosselnut 12 ausgebildet, die sich über die Länge des Innenraums des Zylinders 1 erstreckt.

Das Innere des Zylinders 1 der Figuren 5 und 6 besitzt den gleichen Aufbau wie das Innere der Figuren 1 und 2 oder 3 und 4.

Bei einer axialen Bewegung des Kolbens 4 und der ersten Kolbenstange 7 in Ausfahrrichtung der ersten Kolbenstange 7 wird Gas aus der ersten Arbeitskammer 5 über die Drosselbohrung 11 oder die Drosselnut 12 in die zweite Arbeitskammer 6 verdrängt und bei einer Bewegung des Kolbens 4 in Einfahrrichtung bei einer axialen Bewegung des Kolbens 4 und der ersten Kolbenstange 7 in Einfahrrichtung der ersten Kolbenstange 7 wird Gas aus der zweiten Arbeitskammer 5 über die Drosselbohrung 11 oder die Drosselnut 12 in die erste Arbeitskammer 6 verdrängt. Durch die Drosselbohrung 11 bzw. die Drosselnut 12 erfolgt dabei die Bewegung des Kolbens 4 gedämpft.

### Bezugszeichenliste

- 1: Zylinder
- 2: erster Boden
- 3: zweiter Boden
- 4: Kolben
- 5: erste Arbeitskammer
- 6: zweite Arbeitskammer
- 7: erste Kolbenstange
- 8: erste Führungs- und Dichteinheit
- 9: zweite Kolbenstange
- 10: zweite Führungs- und Dichteinheit
- 11: Drosselbohrung
- 12: Drosselnut
- 13: erste Stützscheibe
- 14: zweite Stützscheibe
- 15: erste Kugelpfanne
- 16: Zwischenstück
- 17: Klappe
- 18: Führungsrohr
- 19: Überrohr
- 20: zweites Befestigungselement
- 21: Schraubendruckfeder
- 22: erste Abstützscheibe
- 23: zweite Kugelpfanne
- 24: zweite Abstützscheibe
- 25: Schwenkachse
- 26: Zugfeder

## Patentansprüche

1. Federeinrichtung zum Bewegungsantrieb eines bewegbaren Bauteils aus einer Ruheposition in eine Verstellposition, wobei das bewegbare Bauteil von einer vorgespannten Feder in die Verstellposition belastet ist, mit einem mit einem Gas gefüllten Zylinder (1), der an seinem ersten Ende von einem ersten Boden (2) und an seinem zweiten Ende von einem zweiten Boden (3) verschlossen ist und dessen Innenraum von einem axial verschiebbaren Kolben (4) in eine erste Arbeitskammer (5) und eine zweite Arbeitskammer (6) unterteilt ist, wobei die erste Arbeitskammer (5) und die zweite Arbeitskammer (6) über eine Drossel miteinander verbunden sind, und der Kolben (4) eine Kolbenstange (7) aufweist, die durch die erste Arbeitskammer (5) hindurch und abgedichtet durch den ersten Boden (2) nach außen geführt ist sowie mit ihrem freien Ende an dem bewegbaren Bauteil oder einem feststehenden Bauteil befestigt ist, wobei an dem Kolben (4) eine zweite Kolbenstange (9) angeordnet ist, die durch die zweite Arbeitskammer (6) hindurch und abgedichtet durch den zweiten Boden (3) nach außen geführt ist, **dadurch gekennzeichnet, daß** der Zylinder ein mit einem unter Druck stehenden Gas gefüllter Zylinder einer Gasfeder ist.

2. Federeinrichtung nach Anspruch 1, **dadurch gekennzeichnet, daß** das der ersten Kolbenstange (7) abgewandte Ende des Zylinders (1) an dem feststehenden Bauteil oder dem bewegbaren Bauteil befestigt ist.

3. Federeinrichtung nach Anspruch 1, **dadurch gekennzeichnet, daß** das freie Ende der zweiten Kolbenstange (9) an dem feststehenden Bauteil oder dem bewegbaren Bauteil befestigt ist.

4. Federeinrichtung nach einem der vorhergehenden Ansprüche, **dadurch gekennzeichnet, daß** die erste Kolbenstange (7) und die zweite Kolbenstange (9) gleichen Querschnitt aufweisen.

5. Federeinrichtung nach einem der vorhergehenden Ansprüche, **dadurch gekennzeichnet, daß** die Drossel eine in dem Kolben (4) axial durchgehend ausgebildete Drosselbohrung (11) ist.

6. Federeinrichtung nach einem der Ansprüche 1 bis 4, **dadurch gekennzeichnet, daß** die Drossel eine axiale Drosselnut (12) in der Innenwand des Zylinders (1) ist.

7. Federeinrichtung nach einem der vorhergehenden Ansprüche, **dadurch gekennzeichnet, daß** die Feder eine mechanische Zugfeder (26) oder Druckfeder ist.

8. Federeinrichtung nach Anspruch 7, **dadurch gekennzeichnet, daß** die Feder eine Schraubendruckfeder (21) ist, die koaxial den Zylinder (1) und die erste Kolbenstange (7) mit radialem Spiel umschließt und mit ihrem ersten Ende an dem aus dem Zylinder (1) ragenden Bereich der ersten Kolbenstange (7) abgestützt ist und mit seinem zweiten Ende an dem Zylinder (1) oder einem mit dem Zylinder (1) verbundenen Bauteil abgestützt ist.

9. Federeinrichtung nach einem der vorhergehenden Ansprüche, **dadurch gekennzeichnet, daß** sich ein mit dem Zylinder (1) koaxial verbundenes Führungsrohr (18) von dem Zylinder (1) in Erstreckungsrichtung der zweiten Kolbenstange erstreckt.

10. Federeinrichtung nach den Ansprüchen 8 und 9, **dadurch gekennzeichnet, daß** die Schraubendruckfeder (21) das Führungsrohr (18) mit radialem Spiel umschließt.

11. Federeinrichtung nach einem der vorhergehenden Ansprüche, **dadurch gekennzeichnet, daß** das bewegbare Bauteil eine um eine Schwenkachse (25) schwenkbare Klappe (17) ist, an der oder an einem mit der Klappe (17) verbundenen Bauteil die erste Kolbenstange (7) sowie die Feder jeweils in einem Abstand zur Schwenkachse (25) angelenkt sind.

## Claims

1. Spring device for the motion drive of a movable component from a rest position into a displaced position, the movable component being loaded into the displaced position by a preloaded spring, comprising a gas-filled cylinder (1) which at its first end is closed by a first end plate (2) and at its second end is closed by a second end plate (3) and the interior of which is subdivided by an axially displaceable piston (4) into a first working chamber (5) and a second working chamber (6), the first working chamber (5) and the second working chamber (6) being connected to each other via a restrictor, and the piston (4) having a piston rod (7) which is led through the first working chamber (5) and is led to the outside through the first end plate (2) in a sealed manner, and the said piston also being fixed by its free end to the movable component or a stationary component, a second piston rod (9), which is led through the second working chamber (6) and is led to the outside through the second end plate (3) in a sealed manner, being arranged on the piston (4), **characterized in that** the cylinder is a pressurized gas-filled cylinder of a gas spring.

2. Spring device according to Claim 1, **characterized in that** the end of the cylinder (1) that faces away from the first piston rod (7) is fixed to the stationary component or the movable component.

3. Spring device according to Claim 1, **characterized in that** the free end of the second piston rod (9) is fixed to the stationary component or the movable component.

4. Spring device according to one of the preceding claims, **characterized in that** the first piston rod (7) and the second piston rod (9) have the same cross section.

5. Spring device according to one of the preceding claims, **characterized in that** the restrictor is a restrictor bore (11) formed passing axially through the piston (4).

6. Spring device according to one of Claims 1 to 4, **characterized in that** the restrictor is an axial restrictor groove (12) in the inner wall of the cylinder (1).

7. Spring device according to one of the preceding claims, **characterized in that** the spring is a mechanical tension spring (26) or compression spring.

8. Spring device according to Claim 7, **characterized in that** the spring is a helical compression spring (21) which encloses the cylinder (1) and the first piston rod (7) coaxially with a radial clearance and is supported by its first end on the region of the first piston rod (7) projecting out of the cylinder (1), and is supported by its second end on the cylinder (1) or a component connected to the cylinder (1).

9. Spring device according to one of the preceding claims, **characterized in that** a guide tube (18) connected coaxially to the cylinder (1) extends from the cylinder (1) in the direction of extent of the second piston rod.

10. Spring device according to Claims 8 and 9, **characterized in that** the helical compression spring (21) encloses the guide tube (18) with a radial clearance.

11. Spring device according to one of the preceding claims, **characterized in that** the movable component is a flap (17) that can be pivoted about a pivot axis (25), to which or to a component connected to the flap (17) the first piston rod (7) and the spring are attached, in each case at a distance from the pivot axis (25).

## Revendications

1. Dispositif de ressort pour la mise en mouvement d'un composant déplaçable d'une position de repos à une position déplacée, dans lequel le composant déplaçable est chargé par un ressort précontraint dans la position déplacée, avec un cylindre (1) rempli d'un gaz, qui est fermé à sa première extrémité par un premier fond (2) et à sa seconde extrémité par un second fond (3) et dont l'espace intérieur est divisé par un piston déplaçable axialement (4) en une première chambre de travail (5) et une seconde chambre de travail (6), dans lequel la première chambre de travail (5) et la seconde chambre de travail (6) sont raccordées l'une à l'autre par un étranglement, et le piston (4) présente une tige de piston (7), qui est guidée à travers la première chambre de travail (5) et de façon étanche vers l'extérieur à travers le premier fond (2) et qui est fixée par son extrémité libre au composant déplaçable ou à un composant immobile, dans lequel une seconde tige de piston (9) est disposée sur le piston (4), qui est guidée à travers la seconde chambre de travail (6) et de façon étanche vers l'extérieur à travers le second fond (3), **caractérisé en ce que** le cylindre est un cylindre rempli d'un gaz sous pression d'un ressort pneumatique.

2. Dispositif de ressort selon la revendication 1, **caractérisé en ce que** l'extrémité du cylindre (1) détournée de la première tige de piston (7) est fixée au composant immobile ou au composant déplaçable.

3. Dispositif de ressort selon la revendication 1, **caractérisé en ce que** l'extrémité libre de la seconde tige de piston (9) est fixée au composant immobile ou au composant déplaçable.

4. Dispositif de ressort selon l'une quelconque des revendications précédentes, **caractérisé en ce que** la première tige de piston (7) et la seconde tige de piston (9) présentent la même section transversale.

5. Dispositif de ressort selon l'une quelconque des revendications précédentes, **caractérisé en ce que** l'étranglement est un trou foré d'étranglement (11) axialement traversant formé dans le piston (4).

6. Dispositif de ressort selon l'une quelconque des revendications 1 à 4, **caractérisé en ce que** l'étranglement est une rainure d'étranglement axiale (12) dans la paroi intérieure du cylindre (1).

7. Dispositif de ressort selon l'une quelconque des revendications précédentes, **caractérisé en ce que** le ressort est un ressort mécanique de traction (26) ou de compression.

8. Dispositif de ressort selon la revendication 7, **caractérisé en ce que** le ressort est un ressort de compression hélicoïdal (21), qui entoure de façon coaxiale le cylindre (1) et la première tige de piston (7) avec un jeu radial et qui prend appui par sa première extrémité sur la région de la première tige de piston (7) sortant du cylindre (1) et qui prend appui par sa seconde extrémité sur le cylindre (1) ou sur un composant assemblé au cylindre (1).

9. Dispositif de ressort selon l'une quelconque des revendications précédentes, **caractérisé en ce qu'**un tube de guidage assemblé de façon coaxiale au cylindre (1) s'étend du cylindre (1) dans la direction d'extension de la seconde tige de piston.

10. Dispositif de ressort selon les revendications 8 et 9, **caractérisé en ce que** le ressort de compression hélicoïdal (21) entoure le tube de guidage (18) avec un jeu radial.

11. Dispositif de ressort selon l'une quelconque des revendications précédentes, **caractérisé en ce que** le composant déplaçable est un clapet (17) pouvant pivoter autour d'un axe de pivotement (25), sur lequel ou sur un composant assemblé au clapet (17) sont articulés la première tige de piston (7) ainsi que le ressort chaque fois à une distance de l'axe de pivotement (25).
